# EUROPEAN PATENT SPECIFICATION

(11) **EP 1 396 189 B1**
(45) Date of publication and mention of the grant of the patent: **15.03.2006**
(21) Application number: 02380231.7
(22) Date of filing: 06.11.2002
(51) Int. Cl.: A01K 61/00

(54) **Round shaped raft for growing up of bivalves**
Runde Flosse zum Züchten von zweischaligen Meerestieren
Radeau d'une forme ronde pour l'élevage de bivalves

(30) Priority: 03.09.2002 ES 200202046
(43) Date of publication of application: 10.03.2004
(73) Proprietor: Rodriguez Vazquez, Juan Ignacio, San Esteban de Moras, 15690 Arteixo, La Coruna (ES)
(72) Inventor: Rodriguez Vazquez, Juan Ignacio, San Esteban de Moras, 15690 Arteixo, La Coruna (ES)

(56) References cited:
- WO-A-91/17653
- WO-A-02/051243
- WO-A-03/063583
- GB-A- 2 302 525

## Description

### TECHNICAL SECTOR:

The device shown in this document, belongs to the aquaculture field. Growing up fish for human consumption.

### State of the art

Now a days, for bivalves production, most spread device are rafts. Here in Galicia, most popular rafts are made by great floaters in a varied number over which is settled an eucalyptus grill from which growing ropes hang.

One of traditional raft drawbacks comes from the use of wood for grill building, if we consider the deforestation of national forest being also an outcome the problems to find raw material.(wood) (Recall that it is necessary to use large trees with optimal features). Besides, this material lasts for about ten years. It's also necessary to keep a distance between wood and water surface to avoid the negative influence of micro organisms against wood.(otherwise wood lasting would be even smaller)

Traditional rafts, being built from wood are not able to stand hard storms and wave loads when they are installed offshore. That is the reason why most of them have been placed into the bays and estuaries (where Galician administration doesn't allow the settlement of more licenses).These Galician bays have got very rich waters although they have became almost exhausted by this activity.

Document GB-A-2 302 525 discloses a circular shaped raft for growing bivalves comprising a buoyancy system, a circularly shaped pipe and growing ropes.

### DESCRIPTION OF INVENTION:

This invention has got two advantages: Firstly, it will allow the installation of rafts offshore due both to its structural arrangement and to property of used materials. Secondly, they are a different choice from the use of wood for inshore rafts, so a new choice to traditional rafts.

Meaning, this invention due to its shape and used materials, overcomes traditional drawbacks of rafts.

The invention as defined in claim 1 is intended to remedy these drawbacks. Preferred features of the invention are set out in the dependent claims

### This raft has got as features (see picture 1 and 2):

- 1)-Pipes made from polyethylene with round shape (concentric circumferences) lying at surface level that gives buoyancy to the whole device.
- 2)-Pipes made from polyethylene with circular shape raised from surface level in a height enough to allow attachment of growing ropes in an ergonomic and safe way.
- 3)-Metallic structures protected against corrosion whose aim is attach different pipe circles and also help in whole device buoyancy. They will be also used as a mooring point for the raft. Disposition of those supports will divide circular general shape into sectors.
- 4)-Polyethylene sheets will be used as stiffeners of supports and will be installed between every two metallic supports, and in the same way that foregoing supports will divide circumference of raft into sectors. They will be divided into two parts, being the division at middle height of buoyancy pipes, allowing this way an easy assembly system.
- This raft will have a great resistance and flexibility being then able its installation offshore cause it will be able to stand sea beatings and allow deformation with waves movement so that growing ropes keep in a suitable position.
- This raft is also distinguished because it has the choice to add a circular cage placed in the empty inner part of that round shaped pipes.
- This raft is also distinguished because it has the choice to have metallic structures(3) that are not floaters. Could be just attachments and stiffeners.

### Brief Description of drawings:

Picture 1 shows a ground plan view of the invention. (without cage, cuz it isn't always installed) Picture 2 shows a front view of the invention.
5) are growing ropes.
6) Rings to make easy grabbing of ropes.
7) Floating pipes of inner cage.
8) Cage rails.
9) Cage attachments.
9) Cage attachments.
10) Cage mooring point.
11) Cage net.
12) Cage-Raft mooring

### Description of one way of building.

This invention will be made from:
- Five polyethylene pipes of 500mm diameter (1) that provides buoyancy to the system. First and external pipe circle will have 50m of diameter from which other concentric pipe circles of less diameter are settled inwards.
- Five PE circle shaped pipes (2), of 110mm settled 700mm over the floating ones and moved inwards so that finally find between floating ones.
- Growing ropes will be provided with a ring in their low edge, to make easy the grab of the ropes from the working oat.
- These pipes would keep position thanks to sixteen metallic structures that could be made from naval steel being floating just the half of them. They would be sixteen. Their function would be just stiffening attachments to keep pipes in position.
- Would have polyethylene sheets of 25mm thickness that is used as stiffeners of metallic structures.
- If the owners chose this option, it would have a cage in the middle to grow up fish.

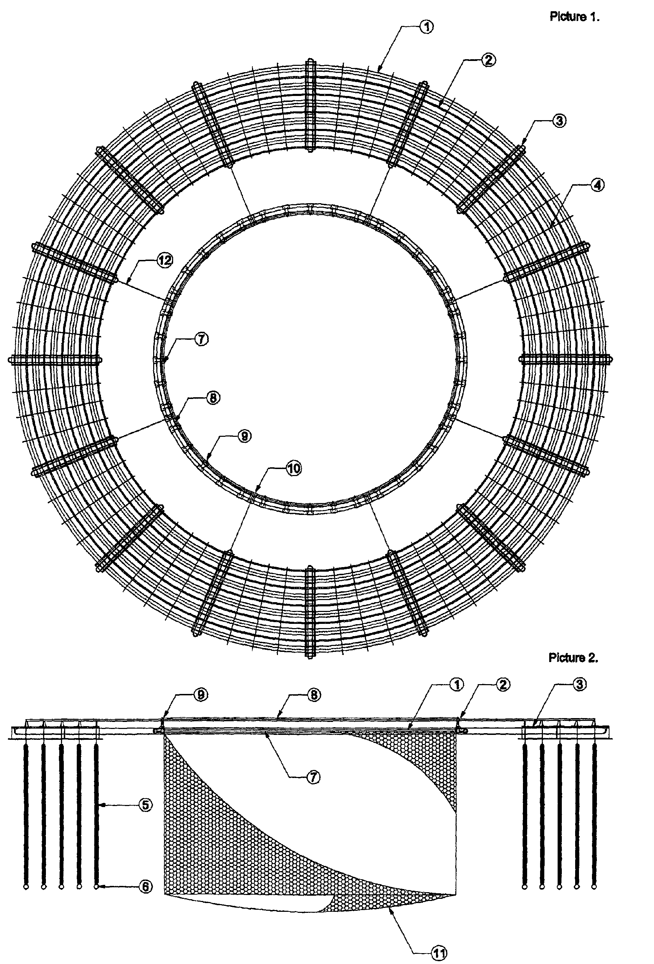

## Claims

1. A circular shaped raft for growing up of bivalves offshore comprising a buoyancy system with at least one circularly shaped pipe (1) made from polyethylene and also comprising growing ropes (5), **characterised in that** the buoyancy system consists of a plurality of concentric pipes (1) equidistantly and concentrically installed, and **in that** the growing up ropes (5) are moored to concentric circularly shaped pipes (2), which are concentric and equidistantly raised over the water surface at a height enough to allow an ergonomic and safe handling.

2. A circular shaped raft according to claim 1, **characterised in that** the buoyancy pipes (1) and the ropes-supporting pipes (2) are kept in an attached position by metallic structures (3) protected against rust.

3. A circular shaped raft according to claim 2, **characterised in that** it has got polyethylene sheets to stiffen the metallic structures (3).

4. A circular shaped raft according to anyone of claims 1 to 3, **characterised in that** it comprises a cage (11) placed in the middle of the raft for growing up fish.

## Patentansprüche

1. Floß in Ringform zur Muschelzucht auf offenem Meer. Dieses besteht aus folgenden Elementen: Schwimmergestelle aus mindestens einer aus Polyäthylen gefertigten kreisförmig angelegten Rohrstruktur (1); Hängeleinen für das Muschelwachstum (5); Schwimmergestell besteht aus einer Anzahl von gleichmäßig angeordneten konzentrischen Rohren (1); die Hängeleinen sind an der konzentrischen Rohrstruktur (2) befestigt, welche in gleimäßigen Abständen voneinander und in genügender Entfernung von der Wasseroberfläche angebracht sind, um eine sichere und zweckmäßige Handhabung zu gewährleisten;

2. Ein Floß in Ringform (siehe Anmerkung 1) charakterisiert durch Schwimmrohre (1) und Trägerrohre der Hängeleinen (2), welche durch Metallstrukturen (3) zusammengehalten werden; die Metallstrukturen sind gegen Korrosion geschützt;

3. Ein Floß in Ringform (siehe Anmerkung 2) charakterisiert durch Polyäthylenplatten zur Spannung und Festigung der Metallstrukturen (3);

4. Ein Floß in Ringform (siehe Anmerkungen 1, 2 und 3) charakterisiert durch die Anlage eines Fischzuchtkäfigs (11) im Zentrum der Struktur

## Revendications

1. Une batée circulaire pour l'élevage de bivalves en mer ouverte comprenant un système de flottaison avec au moins un tube circulaire (1) fabriqué en polyéthylène et comprenant également des cordes d'élevage (5), **caractérisée par le fait que** le système de flottaison consiste en plusieurs tubes concentriques (1) installés de façon équidistante et concentrique, et aussi **par le fait que** les cordes d'élevage sont amarrées à des tubes concentriques circulaires (2) qui sont élevés de façon équidistante et concentrique de la surface de l'eau à une hauteur suffisante qui permet une manipulation ergonomique et sûre.

2. Une batée circulaire selon la revendication 1, **caractérisée par le fait que** les tubes de flottaison (1) et les tubes supportant les cordes sont maintenus unis para des structures métalliques (3) protégées contre la corrosion.

3. Une batée circulaire selon la revendication 2, **caractérisée par le fait qu'**elle possède des planches de polyéthylène pour renforcer les structures métalliques (3).

4. Une batée circulaire selon quelconque des revendications 1 à 3, **caractérisée par le fait qu'**elle inclus une cage (11) placée au milieu de la batée pour élever du poisson.
